# EUROPEAN PATENT APPLICATION

(11) **EP 0 875 663 A1**
(43) Date of publication of application: **04.11.1998**
(21) Application number: 98303203.8
(22) Date of filing: 24.04.1998
(51) Int. Cl.: E21D 21/00, E21F 17/18, G01B 5/18, G01B 3/28

(54) **Roof bolt with a visual length indicator**

(30) Priority: 02.05.1997 US 45448 P; 31.10.1997 US 961904
(71) Applicant: INGERSOLL-RAND COMPANY, Woodcliff Lake, NJ 07675 (US)
(72) Inventor: Karlsen, Terje, Portland, Oregon 97236 (US)
(74) Representative: Feakins, Graham Allan

(57) **Abstract**

A system for providing a visual body length indicator for a group of mine roof stabilisers (1) of various, unique lengths includes providing each stabiliser with a tubular body (3) and a slot (11) along the body. A bottom annular ring (20) having a ring gap (26) formed therein is attached to the body, with the ring gap and body slot being orientated in a unique relation for each unique body length, providing a visual indicator of body length that can be observed from a distance, even after the stabiliser is installed into a drill hole in a mine roof.

## Description

This invention relates to mine roof stabilisers, and more particularly to mine roof stabilisers supplied under the registered trademark "SPLIT SET" by Ingersoll-Rand Company.

After a "Split Set" stabiliser is installed in the roof or wall of a mine, all that is visible is the flange end of the stabiliser having a ring member retaining a load bearing plate. There is no quick, practical and convenient method of visually identifying the length of the installed stabiliser. Customers require such information to be certain that the correct length has been installed in accordance with their roof plan.

The length in inches (one inch = 2.54cm) is stamped inside each tube, but is not readily visible from ten feet away (3.048m). Painting the flange ends to colour code the length has been tried but shown to be ineffective; the paint flakes off under impact during installation, and can get covered over by rock dust.

According to one aspect of the present invention, there is provided a system for providing a visual body length indicator for a group of mine roof stabilisers, each individual stabiliser having a unique body length, comprising:
(a) providing each individual stabiliser with an elongate, hollow tubular body member having a side wall that, when viewed in horizontal planar cross-section, defines a generally circular structure, said body terminating at a top end and a bottom end; and
(b) providing each individual stabiliser with a slot in said body member, said slot extending lengthwise along said body member between said top and bottom ends; characterised by:
(c) providing each individual stabiliser with an annular support ring member, said ring member having a first and second end portion spaced apart from each other to form a ring gap;
(d) concentrically positioning each said ring member around each individual stabiliser body member adjacent said bottom end;
(e) orientating each said ring gap with respect to each said individual stabiliser slot in a unique, preselected circular orientation, as measured axially around a centre axis extending lengthwise along each said individual stabiliser body member, each said unique orientation being selected to correspond to an individual, unique length dimension of an individual stabiliser body member; and
(f) fastening said ring member to said individual body member.

According to a second aspect, there is provided a method of constructing a mine roof stabiliser comprising:
(a) forming an elongate, hollow tubular body member having a side wall that, when viewed in horizontal planar cross-section, defines a generally circular structure; said body terminating at a top end and a bottom end; and
(b) forming a slot in said body member, said slot extending lengthwise along said body member between said top and bottom ends; characterised by:
(c) attaching an annular support ring member concentrically around said body member adjacent said bottom end, said ring member having a first and second end portion spaced apart from each other to form a ring gap; and
(d) said ring gap being orientated with respect to said slot in a preselected, unique circular orientation, as measured axially around a centre axis extending lengthwise along said body member, said orientation being selected to correspond to a unique, preselected length body member, to indicate visually said body member's length.

According to a third aspect, there is provided a method for providing a visual body length indicator for a mine roof stabiliser, said stabiliser having a unique, preselected body length, comprising:
(a) providing an elongate, hollow tubular body member with a unique, preselected body length, said body member having a side wall that, when viewed in horizontal planar cross-section, defines a generally circular structure, said body terminating at a top end and a bottom end; and
(b) providing a slot in said body member, said slot extending lengthwise along said body member between said top and bottom ends; characterised by:
(c) providing an annular support ring member, said ring member having a first and second end portion spaced apart from each other to form a ring gap;
(d) concentrically positioning said ring member around said body member adjacent said bottom end;
(e) orientating said ring gap with respect to said slot in a unique, preselected circular orientation, as measured axially around a centre axis extending lengthwise along said body member, said orientation being selected to correspond to said unique, preselected length of said body member; and
(f) fastening said ring member to said individual body member.

For a better understanding of the invention and to show how the same may be carried into effect, reference will now be made, by way of example to the accompanying drawings, in which:-
Fig. 1 is a schematic elevational view of a roof stabiliser, with a ring gap orientated at 3 O'clock in relation to a tube slot;
Fig. 2 is a view along A-A of Fig. 1;
Fig. 3 is a view along B-B of Fig. 1;
Fig. 4 is a view similar to Fig. 1, with a ring gap orientated at 4 O'clock in relation to a tube slot;
Fig. 5 is a view along A-A of Fig. 4;
Fig. 6 is a view along B-B of Fig. 4;
Fig. 7 is a view similar to Fig. 1, with a ring gap orientated at 5 O'clock in relation to a tube slot;
Fig. 8 is a view along A-A of Fig. 7;
Fig. 9 is a view along B-B of Fig. 7;
Fig. 10 is a view similar to Fig. 1, with a ring gap orientated at 6 O'clock in relation to a tube slot;
Fig. 11 is a view along A-A of Fig. 10;
Fig. 12 is a view along B-B of Fig. 10;
Fig. 13 is a view similar to Fig. 1, with a ring gap orientated at 7 O'clock in relation to a tube slot;
Fig. 14 is a view along A-A of Fig. 13;
Fig. 15 is a view along B-B of Fig. 13;
Fig. 16 is a view similar to Fig. 1, with a ring gap orientated at 8 O'clock in relation to a tube slot;
Fig. 17 is a view along A-A of Fig. 16;
Fig. 18 is a view along B-B of Fig. 16;
Fig. 19 is a view similar to Fig. 1, with a ring gap orientated at 9 O'clock in relation to a tube slot;
Fig. 20 is a view along A-A of Fig. 19;
Fig. 21 is a view along B-B of Fig. 19;
Fig. 22 is a view similar to Fig. 1, with a ring gap orientated at 10 O'clock in relation to a tube slot;
Fig. 23 is a view along A-A of Fig. 22; and
Fig. 24 is a view along B-B of Fig. 22.

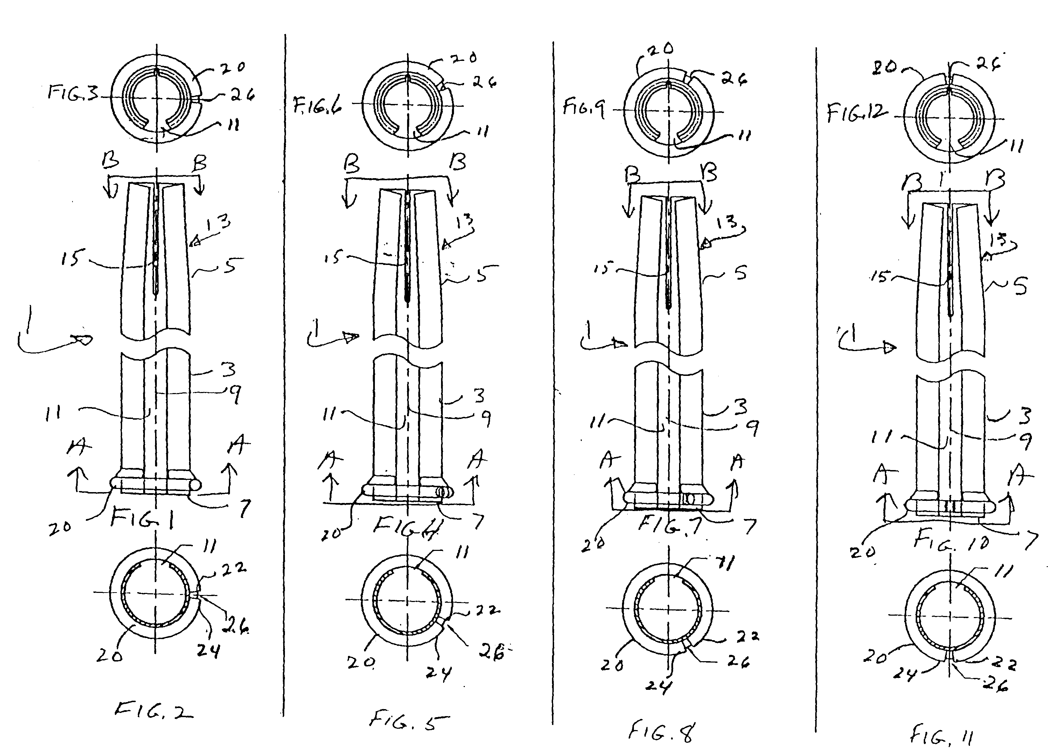

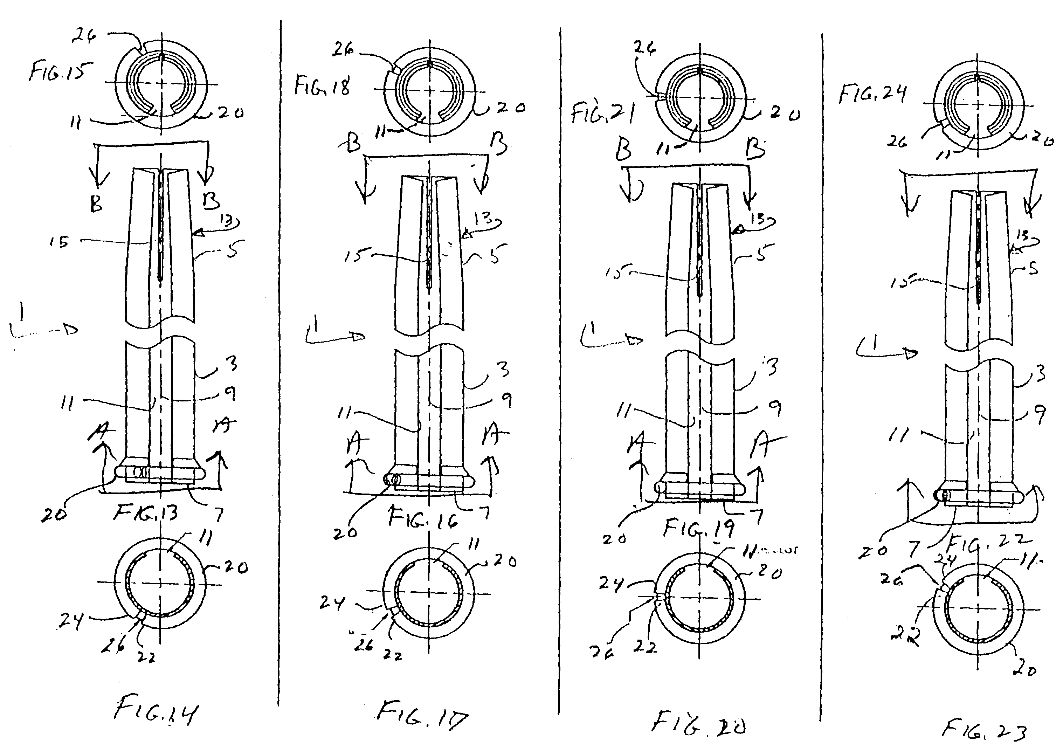

Referring to the drawings, a "Split Set" stabiliser 1 includes an elongate hollow tubular body member 3 terminating at a top end 5 and a bottom end 7. The body 3 has a sidewall that encircles a centre axis 9 that extends lengthwise along the body member 3. When viewed in a planar cross-section, the body 3 defines a generally annular or circular structure (Figs. 2, 3, 5, 6, 8, 9, 11, 12, 14, 15, 17, 18, 20, 21, 23 and 24). A slot 11 extends lengthwise in the body member 3 between the top end 5 and bottom end 7. The top end 5 is usually swaged to a taper 13 and may include a second slot 15 extending a short length along the taper 13, as is well known.

The stabiliser 1 is produced according to the following well known procedures: hot-rolled steel sheets of the correct thickness are formed into the body 3 in a tube rolling mill, but instead of closing the tube, the longitudinal slot 11 is left open, with a preferred slot width of about ⅝ inch (16mm). Slotted tubes cut to the specified length are thereafter swaged to the taper 13 to facilitate entering the drilled hole of the rock that forms a mine roof or mine wall. Preferably, an optional second slot 15 can be produced in a stamping die.

An annular ring 20 is concentrically mounted onto the bottom end 7 and permanently fastened as by welding. The ring 20 is formed from hot rolled steel rod by a conventional forming method such as cold bending. The ring 20 has a first end 22 and a second end 24 spaced apart therefrom, forming a ring gap 26. The ring gap 26 can be of any arcuate dimension but is preferably in the range of ⅛ to ⅜ inches (3mm to 9mm) as measured around the axis 9.

Prior to being welded to the body 3, the ring 20 is indexed at a unique, preselected annular position around the axis 9, so that the ring gap 26 occupies a unique, preselected relation to the annular position of the slot 11 for each commonly produced stabiliser length. Thus, it can be understood that the ring gap 26 can be orientated at a plurality of preselected circular orientation around the axis 9. Each unique, individual ring gap/slot orientation will visually represent a unique, preselected length of stabiliser 1. After stabiliser 1 is inserted into a drill hole, the ring 20 and slot 11 will be visible to a miner.

As shown in Figs. 2, 5, 8, 11, 14, 17, 20 and 23, the ring gap 26 is positioned at the following respective orientations, with respect to the slot 11, according to the following nomenclature: 3 O'clock, 4 O'clock, 5 O'clock, 6 O'clock, 7 O'clock, 8 O'clock, 9 O'clock and 10 O'clock. Each unique orientation represents a unique stabiliser body length as follows: 3 O'clock, 3 feet (91cm); 4 O'clock, 4 feet (122cm); 5 O'clock, 5 feet (152cm); 6 O'clock, 6 feet (183cm); 7 O'clock, 7 feet (213cm); 8 O'clock, 8 feet (244cm); 9 O'clock, 9 feet (274cm); and 10 O'clock, 10 feet (305cm). As used herein, the terms "unique preselected stabiliser body length" and "unique body length" mean the stated preselected length, plus or minus a variance that can cause the length to extend to, but not overlap upon, the next adjacent stated preselected length, either longer or shorter. Also, it should be understood that other unique O'clock orientations could be used to identify other preselected groupings of lengths.

Thus, the present structure provides a system for length coding of a family of stabilisers of preselected groupings of lengths, each individual member of the family having a unique, preselected ring gap/slot orientation, to indicate visually the stabiliser body length grouping to which it belongs.

## Claims

1. A system for providing a visual body length indicator for a group of mine roof stabilisers (1), each individual stabiliser (1) having a unique body length, comprising:
(a) providing each individual stabiliser with an elongate, hollow tubular body member (3) having a side wall that, when viewed in horizontal planar cross-section, defines a generally circular structure, said body terminating at a top end (5) and a bottom end (7); and
(b) providing each individual stabiliser with a slot (11) in said body member, said slot extending lengthwise along said body member between said top and bottom ends;
characterised by:
(c) providing each individual stabiliser with an annular support ring member (20), said ring member having a first (22) and second (24) end portion spaced apart from each other to form a ring gap (26);
(d) concentrically positioning each said ring member (20) around each individual stabiliser body member (3) adjacent said bottom end (7);
(e) orientating each said ring gap (26) with respect to each said individual stabiliser slot (11) in a unique, preselected circular orientation, as measured axially around a centre axis (9) extending lengthwise along each said individual stabiliser body member, each said unique orientation being selected to correspond to an individual, unique length dimension of an individual stabiliser body member; and
(f) fastening said ring member (20) to said individual body member (1).

2. A method of constructing a mine roof stabiliser (1) comprising:
(a) forming an elongate, hollow tubular body member (3) having a side wall that, when viewed in horizontal planar cross-section, defines a generally circular structure; said body terminating at a top end (5) and a bottom end (7); and
(b) forming a slot in said body member, said slot extending lengthwise along said body member between said top and bottom ends; characterised by:
(c) attaching an annular support ring member (20) concentrically around said body member (3) adjacent said bottom end (7), said ring member having a first (22) and second (24) end portion spaced apart from each other to form a ring gap (26); and
(d) said ring gap (26) being orientated with respect to said slot (11) in a preselected, unique circular orientation, as measured axially around a centre axis (9) extending lengthwise along said body member, said orientation being selected to correspond to a unique, preselected length body member (3), to indicate visually said body member's length.

3. A method for providing a visual body length indicator for a mine roof stabiliser (1), said stabiliser having a unique, preselected body length, comprising:
(a) providing an elongate, hollow tubular body member (3) with a unique, preselected body length, said body member having a side wall that, when viewed in horizontal planar cross-section, defines a generally circular structure, said body terminating at a top end (5) and a bottom end (7); and
(b) providing a slot (11) in said body member, said slot extending lengthwise along said body member between said top and bottom ends; characterised by:
(c) providing an annular support ring member (20), said ring member having a first (22) and second (24) end portion spaced apart from each other to form a ring gap (26);
(d) concentrically positioning said ring member (20) around said body member (3) adjacent said bottom end;
(e) orientating said ring gap (26) with respect to said slot (11) in a unique, preselected circular orientation, as measured axially around a centre axis (9) extending lengthwise along said body member, said orientation being selected to correspond to said unique, preselected length of said body member (3); and
(f) fastening said ring member (20) to said individual body member (3).

4. A mine roof stabiliser when made according to the method of claim 2 or 3.
